# EUROPÄISCHE PATENTSCHRIFT

(11) **EP 1 273 489 B1**
(45) Veröffentlichungstag und Bekanntmachung des Hinweises auf die Patenterteilung: **14.06.2006**
(21) Anmeldenummer: 02015036.3
(22) Anmeldetag: 05.07.2002
(51) Int. Cl.: B60R 21/20

(54) **Beifahrer-Airbag-Modul**
Passenger-side airbag module
Module de coussin gonflable côté passager

(30) Priorität: 06.07.2001 DE 10132931
(43) Veröffentlichungstag der Anmeldung: 08.01.2003
(60) Teilanmeldung: 05020225.8
(73) Patentinhaber: ADAM OPEL AG, 65423 Rüsselsheim (DE)
(72) Erfinder: Rick, Ulrich, Dipl.-Ing., 55595 Roxheim (DE)

(56) Entgegenhaltungen:
- DE-A- 19 957 578
- US-A- 5 988 677

## Beschreibung

Die Erfindung bezieht sich auf ein Beifahrer-Airbag-Modul für ein Kraftfahrzeug mit einem einteiligen Gehäuse für einen aufblasbaren Gassack, einem Diffusor und einem Gasgenerator zur Erzeugung von Druckgas, wobei das Gehäuse eine mit dem Diffusor verbundene Gasgeneratorkammer und eine Gassackkammer aufweist.

Die Druckschrift DE 199 57 578 A1 beschreibt ein Beifahrer-Airbag-Modul gemäß dem Oberbegriff des Patentanspruchs 1.

Die DE 197 03 767 A1 offenbart ein Gehäuse für einen aufblasbaren Gassack in einem Kraftfahrzeug mit daran angeformten Befestigungshalterungen, einem Diffusor und einem in den Diffusor eingesetzten Gasgenerator. Das einteilige Gehäuse weist zwei Kammern auf, von denen die eine eine Diffusorkammer mit strömungsoptimierten Gasdurchlassöffnungen aufweisenden Kammerwandungen ist, wobei an der Diffusorkammerwandung Verstärkungsrippen des Gehäuses angeformt sind und die andere eine Gassackkammer ist.

Im Weiteren ist aus der DE 44 42 202 A1 ein Beifahrer-Airbag-Modul mit einem Gehäuse für einen aufblasbaren Gassack in einem Kraftfahrzeug bekannt. Das Gehäuse umschließt ein Innengehäuse, das gasdicht mit einem den Gassack halternden Diffusor verbunden ist, der sich bis annähernd an eine Abdeckkappe des Gehäuses erstreckt. Das Beifahrer-Airbag-Modul ist aus einer Vielzahl von Einzelteilen aufgebaut und somit sehr aufwendig zu fertigen und zu montieren.

Darüber hinaus offenbart die DE 197 07 997 A1 ein Airbag-Modul mit einer mit einem Diffusor verbundenen Gasgeneratorkammer und einer Gassackkammer. Zum gerichteten Einleiten des von dem Gasgenerator erzeugten Druckgases in den Gassack sind Gasführungen vorgesehen, die zueinander beabstandet und im Wesentlichen V-förmig zueinander angeordnet sind. Der Gassack ist im unbeaufschlagten Zustand mehrlagig über und zwischen den Gasführungen gefaltet.

Es ist Aufgabe der Erfindung, ein Beifahrer-Airbag-Modul der eingangs genannten Art zu schaffen, das bei einem kompakten Aufbau kostengünstig herstellbar ist und dabei eine verbesserte Sicherheitsfunktion, insbesondere auch bei einer Out-Off-Position des Fahrzeuginsassen gewährleistet.

Erfindungsgemäß wird die Aufgabe durch das Beifahrer-Airbag-Modul mit den Merkmalen des Patentanspruchs 1 gelöst.

Aufgrund der einteiligen Ausführung des Gehäuses mit dem Gasleitkanal ist das Beifahrer-Airbag-Modul unter einem geringen Montageaufwand kostengünstig zu fertigen und weist einen kompakten Aufbau auf. Der Gasleitkanal bewirkt eine hohe Ausströmgeschwindigkeit des Druckgases und leitet dasselbe in eine gewünschte Richtung, womit eine verbesserte Sicherheitsfunktion gewährleistet ist. Selbstverständlich ist es auch möglich, mehrere Gasleitkanäle auszubilden, die das Druckgas bei einer Airbagauslösung gezielt in den Gassack einleiten.

Zweckmäßigerweise geht eine der Längswandungen des im Querschnitt im Wesentlichen rechteckförmig ausgebildeten Gasleitkanals tangential von der Außenwandung der Gasgeneratorkammer ab und die andere Längswandung ist annähernd in der Mitte der Gasgeneratorkammer angeordnet. Durch diese Anordnung der Längswandungen in der Gassackkammer steht auf der einen Seite des Gasleitkanals ein relativ großer Freiraum in der Gassackkammer zur Unterbringung des Gassacks zur Verfügung.

Zur Erhöhung der Strömungsgeschwindigkeit des aus dem mittleren Bereich des Gasleitkanals austretenden Druckgases verlaufen bevorzugt die beiden Längswandungen des Gasleitkanals konkav zueinander. Die derart gebildete Ausströmöffnung des Gasleitkanals begünstigt das Aufblasen des Gassacks in dessen Mitte.

Zur weiteren Verbesserung der Sicherheitsfunktion des Beifahrer-Airbag-Moduls erstreckt sich vorzugsweise der Gasleitkanal bis in die Ebene einer Austrittsöffnung der Gassackkammer.

Um die Entfaltung des Gassacks bei seiner Beaufschlagung zu begünstigen, ist zweckmäßigerweise der Gassack an der freien Oberkante der Gassackkammer umlaufend abgedichtet befestigt. Die Befestigung kann beispielsweise durch Verschweißen oder Verkleben des Gassacks mit dem Gehäuse bzw. der Gassackkammer erfolgen.

Bevorzugt ist der Gassack mittels eines Montagerings befestigt, der in einer Ausnehmung der Gassackkammer eingeklipst ist. Als Ausnehmung kann die freie Oberkante der Gassackkammer doppelwandig ausgeführt werden. Das Einklipsen des den Gassack festlegenden Montagerings ist mit einem geringen Arbeitsaufwand zu bewerkstelligen.

Vorzugsweise überspannt der Gassack im unbeaufschlagten Zustand eine Ausströmöffnung des Gasleitkanals einlagig und ist um den Gasleitkanal umlaufend gefaltet. Die Anordnung des Gassacks mindert in der Kombination mit der hohen Ausströmgeschwindigkeit des Druckgases das Out-Off-Position-Risiko wesentlich. Der Gassack wird bei seiner Beaufschlagung zuerst in der Mitte aufgeblasen, wodurch die weitere Entfaltung und ein Aufreißen einer Abdeckung optimiert erfolgen.

Damit das Druckgas gezielt in den Gassack einströmt, weist vorteilhafterweise der kaminartige Gasleitkanal mehrere parallel zueinander ausgerichtete Züge auf. Die einzelnen Züge können mit Zwischenstegen voneinander getrennt sein.

Zur Gewährleistung einer innigen Durchmischung des Druckgases ist vorzugsweise die Gasgeneratorkammer im Einströmbereich des Gasleitkanals siebartig durchbrochen. Diese Durchbrechungen bewirken darüber hinaus eine Dämpfung und eine Kühlung des Gasstromes, womit eine relativ geringe thermische und dynamischen Belastung des Gassacks und damit auch eine geringe Belastung des Fahrzeuginsassen während der Entfaltung des Gassacks beim Aufblasen einhergehen. Selbstverständlich ist unter einer siebartigen Durchbrechung eine Vielzahl von Durchbrüchen zu verstehen, die beliebige Geometrien aufweisen können. Beispielsweise können die Durchbrechungen rund, mehreckig, oval, kreuzförmig, wabenartig, waffelartig, kastenförmig oder dergleichen ausgebildet sein.

Damit das Beifahrer-Airbag-Modul ein geringes Eigengewicht aufweist, ist vorteilhafterweise das Gehäuse aus Kunststoff gefertigt und weist zumindest im Bereich der Gassackkammer Verstärkungsrippen auf. Das Gehäuse kann im Spritzgussverfahren kostengünstig hergestellt werden und ist aufgrund der Verstärkungsrippen formstabil, wobei die Verstärkungsrippen waben-, waffel-, kastenartig, diagonal oder kreuzweise verlaufen. Neben den Verstärkungsrippen im Bereich der Gassackkammer können auch auf der Außenseite der Gasgeneratorkammer Verstärkungsrippen angeordnet werden. Im Weiteren ist der Kunststoff recyclingfähig und nahezu ohne Einbuße seiner Eigenschaften wieder verwendbar. Der Kunststoff ist korrosionsbeständig und beliebig einfärbbar, weshalb eine Nachbehandlung der Oberflächen des Gehäuses entfällt. Zur besseren Schweißbarkeit kann der Kunststoff schwarz eingefärbt sein. Im Weiteren ist es möglich den Kunststoff mit Füllstoffen zu versehen oder das Gehäuse aus einem Kunststoff zu fertigen, der komplett oder teilweise aus einem Regenerat oder Recyclat besteht.

Es versteht sich, dass die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen.

Die Erfindung wird im folgenden anhand mehrerer Ausführungsbeispiele unter Bezugnahme auf die zugehörigen Zeichnungen näher erläutert. Es zeigen:
- Fig. 1: einen Querschnitt durch ein erfindungsgemäßes Beifahrer-Airbag-Modul, und
- Fig. 2: einen Längsschnitt durch das Gehäuse nach einer bevorzugten Ausgestaltung,

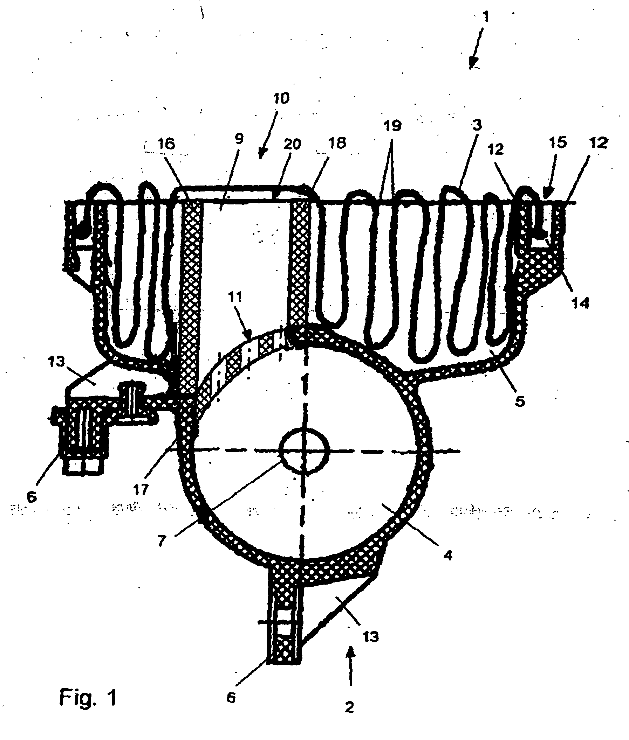

Ein Beifahrer-Airbag-Modul 1 umfasst nach Fig. 1 ein Gehäuse 2 für einen aufblasbaren Gassack 3. Das einstückige Gehäuse 2 weist eine Gasgeneratorkammer 4 zur Aufnahme eines Rohrgasgenerators und eine Gassackkammer 5 zur Aufnahme des im unbeaufschlagten Zustand gefalteten Gassacks 3 auf. Das Gehäuse 2 ist im Spritzgussverfahren aus Kunststoff gefertigt und mit angeformten Halterungen 6 versehen. Die Gasgeneratorkammer 4 weist auf der einen Stirnseite eine Befestigungsöffnung 7 zur Festlegung des Rohrgasgenerators und auf der gegenüberliegenden Stirnseite eine Einführöffnung 8 für denselben auf. An der Gasgeneratorkammer 4 ist der als Gasleitkanal 9 ausgebildete Diffusor 10 angeformt. Der Gasleitkanal 9 erstreckt sich kaminartig durch die Gassackkammer 5 bis in eine Ebene des freien Endes derselben und weist im Anbindungsbereich an die Gasgeneratorkammer 4 eine Einströmöffnung 11 für den Druckgasstrom bei ausgelöstem Airbag-Modul auf, die siebartig durchbrochen ist. Zur Festlegung des Gassacks 3 ist das freie Ende der Gassackkammer 5 doppelwandig ausgebildet. Zwischen die beiden Wandungen 12, die mittels Verstärkungsrippen 13 zueinander beabstandet sind, lässt sich ein den Gassack 3 halternder Montagering 14 in eine zwischen den Wandungen 12 ausgebildete Ausnehmung 15 einklipsen. Weiter Verstärkungsrippen 13 sind in den Anformungsbereichen der Halterungen 6 vorgesehen.

Der im Querschnitt im Wesentlichen rechteckförmige Gasleitkanal 9 verläuft radial zur Gasgeneratorkammer 4, wobei eine der Längswandungen 16 des Gasleitkanals 9 tangential von der Außenwandung 17 der Gasgeneratorkammer 4 abgeht und die andere Längswandung 18 annähernd in der Mitte der Gasgeneratorkammer 4 angeordnet ist. Der Gassack 3 ist derart in der Gassackkammer 5 gefaltet, dass seine Falten 19 im wesentlichen parallel zu dem Gasleitkanal 9 verlaufen, wobei der Gassack 3 eine am freien Ende des Gasleitkanals 9 ausgebildete Ausströmöffnung 20 für das Druckgas einlagig überspannt.

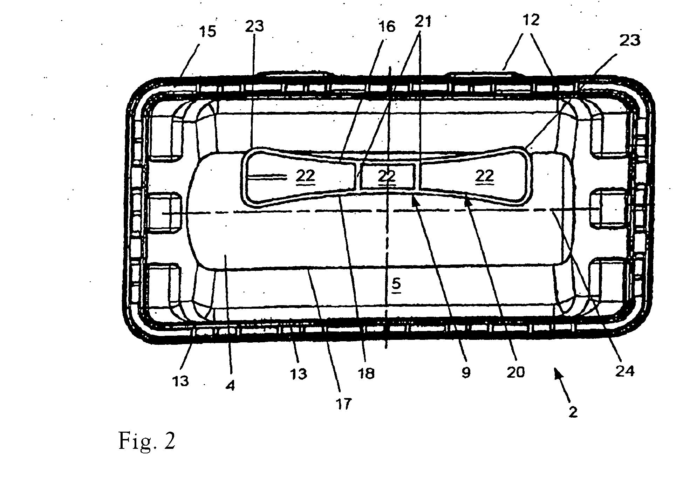

Der kaminartig die Gassackkammer 5 durchragende Gasleitkanal 9 nach Fig. 2 ist durch Zwischenstege 21 in mehrere parallel zueinander verlaufende Züge 22 mit unterschiedlichen Querschnittsflächen unterteilt. Die eine Längswandung 16 des Gasleitkanals 9 geht an ihren äußeren Eckpunkten 23 tangential von der Gasgeneratorkammer 4 ab undist konkav gewölbt. Die andere Längswandung 18 verläuft hierzu parallel und ist ebenfalls konkav gewölbt. Die Ausströmöffnung 20 des Gasleitkanals 9 befindet sich in einer Ebene mit dem freien Ende der Gassackkammer 5.

## Patentansprüche

1. Beifahrer-Airbag-Modul eines Kraftfahrzeuges mit einem einteiligen Gehäuse (2) für einen aufblasbaren Gassack (3), einem Diffusor (10) und einem Gasgenerator zur Erzeugung von Druckgas, wobei das Gehäuse (2) eine mit dem Diffusor (10) verbundene Gasgeneratorkammer (4) und eine Gassackkammer (5) aufweist, wobei der als mindestens ein Gasleitkanal (9) ausgebildete Diffusor (10) einstückig mit dem Gehäuse (2) verbunden ist und sich ausgehend von der Gasgeneratorkammer (4) kaminartig in die Gassackkammer (5) erstreckt,
**dadurch gekennzeichnet, dass** eine der Längswandungen (16) des im Querschnitt im Wesentlichen rechteckförmig ausgebildeten Gasleitkanals (9) tangential von der Außenwandung (17) der Gasgeneratorkammer (4) abgeht und die andere Längswandung (18) annähernd in der Mitte der Gasgeneratorkammer (4) angeordnet ist; und
dass die beiden Längswandungen (16, 18) des Gasleitkanals (9) konkav zueinander verlaufen.

2. Beifahrer-Airbag-Modul nach Anspruch 1 **dadurch gekennzeichnet, dass** sich der Gasleitkanal (9) bis in die Ebene einer Austrittsöffnung der Gassackkammer (5) erstreckt.

3. Beifahrer-Airbag-Modul nach Anspruch 1 oder 2, **dadurch gekennzeichnet, dass** der Gassack (3) an der freien Oberkante der Gassackkammer (5) umlaufend abgedichtet befestigt ist.

4. Beifahrer-Airbag-Modul nach einem der Ansprüche 1 bis 3, **dadurch gekennzeichnet, dass** der Gassack (3) mittels eines Montagerings (14) befestigt ist, der in einer Ausnehmung (15) der Gassackkammer (5) eingeklipst ist.

5. Beifahrer-Airbag-Modul nach einem der Ansprüche 1 bis 4, **dadurch gekennzeichnet, dass** der Gassack (3) im unbeaufschlagten Zustand eine Ausströmöffnung (20) des Gasleitkanals (9) einlagig überspannt und um den Gasleitkanal (9) umlaufend gefaltet ist.

6. Beifahrer-Airbag-Modul nach einem der Ansprüche 1 bis 5, **dadurch gekennzeichnet, dass** die Gasgeneratorkammer (4) im Einströmbereich des Gasleitkanals (9) siebartig durchbrochen ist.

## Claims

1. Front-passenger airbag module of a motor vehicle having a single-piece housing (2) for an inflatable airbag (3), a diffuser (10) and a gas generator for generating pressure gas, wherein the housing (2) has a gas generator chamber (4) connected to the diffuser (10) as well as an airbag chamber (5), wherein the diffuser (10) in the form of at least one gas conduit (9) is integrally connected to the housing (2) and extends from the gas generator chamber (4) like a chimney into the airbag chamber (5),
**characterized in that** one of the longitudinal walls (16) of the, in cross section, substantially rectangular gas conduit (9) leaves tangentially from the outer wall (17) of the gas generator chamber (4) and the other longitudinal wall (18) is disposed approximately in the centre of the gas generator chamber (4); and
that the two longitudinal walls (16, 18) of the gas conduit (9) extend in a concave manner relative to one another.

2. Front-passenger airbag module according to claim 1, **characterized in that** the gas conduit (9) extends right into the plane of an outlet opening of the airbag chamber (5).

3. Front-passenger airbag module according to claim 1 or 2, **characterized in that** the airbag (3) is fastened extending in a sealed manner around the free upper edge of the airbag chamber (5).

4. Front-passenger airbag module according to one of claims 1 to 3, **characterized in that** the airbag (3) is fastened by means of a mounting ring (14) that is clipped in a recess (15) of the airbag chamber (5).

5. Front-passenger airbag module according to one of claims 1 to 4, **characterized in that** the airbag (3) in the unloaded state with one layer overlaps an exhaust opening (20) of the gas conduit (9) and is folded so as to extend around the gas conduit (9).

6. Front-passenger airbag module according to one of claims 1 to 5, **characterized in that** the gas generator chamber (4) is perforated like a sieve in the inlet region of the gas conduit (9).

## Revendications

1. Module d'airbag (ou coussin gonflable) pour passager dans un véhicule automobile, comportant un boîtier (2) monobloc pour un coussin gonflable (3), un diffuseur (10) et un générateur de gaz destiné à générer du gaz sous pression, le boîtier (2) comportant une chambre (4) de générateur de gaz, reliée au diffuseur (10), et une chambre (5) de coussin gonflable, le diffuseur (10) conçu sous la forme d'au moins un conduit de guidage du gaz (9) étant relié d'un seul tenant avec le boîtier (2) et s'étendant à la façon d'une cheminée à partir de la chambre de générateur de gaz (4) dans la chambre (5) de coussin gonflable,
**caractérisé en ce que** l'une des parois longitudinales (16) du conduit de guidage du gaz (9), réalisé avec une section transversale sensiblement rectangulaire, s'étend tangentiellement à partir de la paroi extérieure (17) de la chambre de générateur de gaz (4) et l'autre paroi longitudinale (18) est agencée à peu près au milieu de la chambre de générateur de gaz (4) ; et **en ce que** les deux parois longitudinales (16, 18) du conduit de guidage du gaz (9) s'étendent l'une par rapport à l'autre en forme de courbure concave.

2. Module d'airbag pour passager selon la revendication 1, **caractérisé en ce que** le conduit de guidage du gaz (9) s'étend jusque dans le plan d'un orifice de sortie de la chambre de coussin gonflable (5).

3. Module d'airbag pour passager selon la revendication 1 ou 2, **caractérisé en ce que** le coussin gonflable (3) est fixé de manière étanche sur tout le pourtour sur le bord supérieur libre de la chambre de coussin gonflable (5).

4. Module d'airbag pour passager selon l'une quelconque des revendications 1 à 3, **caractérisé en ce que** le coussin gonflable (3) est fixé au moyen d'une bague de montage (14) qui est encliquetée dans un évidement (15) de la chambre de coussin gonflable (5).

5. Module d'airbag pour passager selon l'une quelconque des revendications 1 à 4, **caractérisé en ce que** le coussin gonflable (3), en position non sollicitée, est tendu en une seule couche au-dessus d'un orifice de sortie (20) du conduit de guidage du gaz (9) et est plié tout autour du pourtour du conduit de guidage du gaz (9).

6. Module d'airbag pour passager selon l'une quelconque des revendications 1 à 5, **caractérisé en ce que** la chambre de générateur de gaz (4) est perforée en forme de tamis dans la zone d'entrée du conduit (9) de guidage du gaz.
